# EUROPEAN PATENT APPLICATION

(11) **EP 3 964 651 A1**
(43) Date of publication of application: **09.03.2022**
(21) Application number: 21195004.3
(22) Date of filing: 06.09.2021
(51) Int. Cl.: E02F 9/20, B62D 6/00, E02F 9/22, A01B 69/00

(54) **STEERING CONTROL METHOD FOR A WORK VEHICLE, STEERING CONTROL CONTROL SYSTEM FOR A WORK VEHICLE AND WORK VEHICLE WITH SUCH A STEERING CONTROL SYSTEM**

(30) Priority: 04.09.2020 IT 202000021004
(71) Applicant: CNH Industrial Italia S.p.A., 10135 Torino (IT)
(72) Inventor: GARRAMONE, Adriano, 73100 Lecce (IT); GRAVILI, Andrea, CAP 73100 Lecce (IT); LIBERTI, Stefano, 73100 Lecce (IT); VENEZIA, Antonio, 10153 Torino (IT)
(74) Representative: CNH Industrial IP Department

(57) **Abstract**

A steering control method for a work vehicle (100) comprising the steps of storing a smoothing trigger position (105), moving the front wheels (115), sensing at least the actual position (106) of the front wheels (115), and if the sensed actual position (106) corresponds to the defined smoothing trigger position (105), then the method comprises the step of decelerating the front wheels (115) with the purpose of smoothly stopping the steering the front wheels (115), and a steering control system (101) for a work vehicle (100) comprising a memory (110), for storing a smoothing trigger position (105) of the front wheels (115), sensor means (111), suitable to acquire information about the actual position (106) of the front wheels (115), a data processing unit (112), suitable to process the information about the actual position (106) acquired by the sensor means (111) to compare it with the stored smoothing trigger position (105), the data processing unit (112) is suitable to control the actuating means (109) for moving the front wheels (115).

## Description

### . Technical field

The present invention relates generally to a work vehicle, such as for example a compact wheel loader.

In particular, the present invention relates to a method for control of the steering of a work vehicle.

The present invention also relates to a corresponding control system and to a work vehicle comprising such control system.

### . Prior art

Motorized work vehicles are well known for use in material handling that carry a bucket and have a hydraulically operated lifting arm for moving the bucket. Examples of such vehicles are tractors and loaders.

A loader is a heavy equipment machine used in construction to move aside on the ground or load materials such as asphalt, demolition debris, dirt, snow, feed, gravel, logs, raw minerals, recycled material, rock, sand, woodchips, etc. into or onto another type of machinery, such as a dump truck, conveyor belt, feed-hopper, or railroad car. There are many types of loader, which, depending on design and application, are called by various names, including bucket loader, front loader, front-end loader, payloader, scoop, shovel, skip loader, wheel loader, or skid-steer. In particular, compact wheel loaders are compact vehicles that have road wheels and carry a working tool, such as a bucket, attached to a lift arm or boom, that is hydraulically powered.

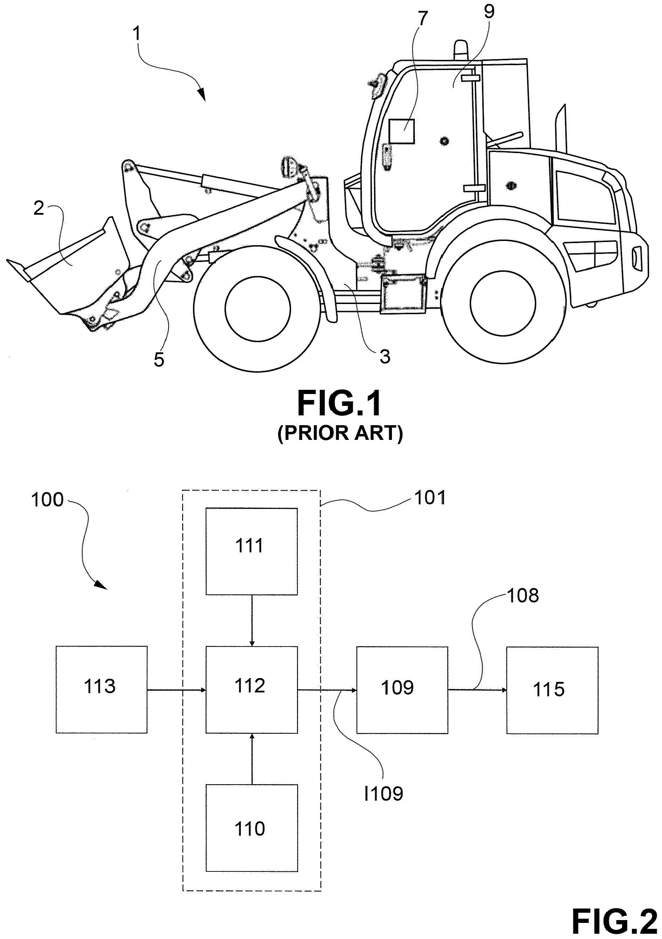

Referring to **figure 1****,** a work vehicle 1, such as a compact wheel loader, is shown. However, the invention is not limited to such a kind of work vehicle, but is applicable to any other kind of work vehicle.

A compact wheel loader includes a bucket 2 connected to a frame 3 or chassis of the work vehicle for movement relative thereto. As shown, a boom 5 is pivotally connected at one end on opposite sides of frame 3. The bucket 2 is pivotally connected at the opposite end of the boom for tilting movement relative to the frame 3 about a generally horizontal axis. The above-described features are substantial part of the present invention and are generally well known in the art. A bucket may be replaced in operation by any other bucket or attachment.

Usually, the movement of the bucket 2 and the movement of the boom 5 are controlled by the user through a joystick 7 placed inside an operator's cab or cabin 9 of the work vehicle 1. Steerable front wheels are usually provided mounted onto the frame 3 or chassis of the work vehicle. The steering angle of two front wheels may follow the Ackermann's Law. Generally, the boom of the work vehicle is also steerably connected to the vehicle's chassis and extend frontally in a cantilevered manner from the chassis.

In a typical arrangement, the steering joint may be located between the front chassis and the rear chassis of the work vehicle, so that the boom steers integrally with the front, steerable chassis and with the front wheel axle of the work vehicle. Thereby, a single steering joint is provided, which needs to bear relevant loads and inertia when in operative conditions. In some cases, also the cab of the work vehicle does steer together with the boom and/or the front wheel axle.

Alternatively, it is also known to provide the front and rear chassis of the vehicle as a whole part, so that the boom does not steer when the front wheels of the work vehicle steer.

Steering of the front wheels is typically hydraulically controlled, and a mechanical valve controls the flow rate supplied to at least one steering cylinder. The mechanical valve is typically controlled by a dedicated wheel or by a steering control interface, such as a joystick or the like.

End stroke abutment walls are usually provided at or near the steering joint to stop the steering travel when it reach its end stroke positions.

The impact of the front chassis against the respective end stroke abutment wall, in particular when the boom is integral with the front chassis and the bucket is fully loaded of material, for example in the case of soil-shifting vehicles and the like, generates a heavy shock due to forces and inertia, and triggers vibratory response in the whole structure of the work vehicle, which may hit the frequency of resonance of the chassis, of the vehicle, and/or parts thereof.

Therefore, such end stroke abutment walls need to be highly resistant to bear these types of recurrent, impulsive impacts. To this end, the end stroke walls, which may be integral with the vehicle chassis, are typically reinforced with suitably designed components. That leads necessarily to an increase in weight of the vehicle, which causes an increase in energy (fuel) consumption, while keeping equal the amount of work carried out. Or, it may increase the amount of work done with a single tank of fuel. Moreover, manufacturing highly resistant end stroke walls can be quite expensive.

In known work vehicles, in addition, the comfort of the driver is negatively affected by the shock and vibrations due to the impact of the steering front chassis against respective end stroke walls.

The need is felt to reduce the costs of manufacturing, maintenance and service of a work vehicle equipped with at least one steerable front chassis, without for this reason reducing the steering capabilities of the work vehicle nor the comfort of the driver.

At the same time, it is felt the need to improve the comfort of the driver of a work vehicle, without increasing the weight of the work vehicle and without reducing the steering capabilities of the work vehicle.

### . Solution

It is a scope of the present invention to overcome the drawbacks mentioned with reference to the known art and providing a solution to the needs reported above.

These and other scopes are achieved by a method according to claim **1,** as well as a system according to claim **8,** as well as a vehicle according to claim **9.**

Some advantageous embodiments are object of the dependent claims.

According to an aspect of the invention, a steering control method for a work vehicle comprises the steps of storing a smoothing trigger position, steering the front vehicle wheels, sensing at least the actual position of the front vehicle wheels.

According to an aspect of the invention, if the sensed actual position corresponds to the defined smoothing trigger position, then the method comprises the step of decelerating the front vehicle wheels with the purpose of smoothly stopping the steering front vehicle wheels.

According to an aspect of the invention, a steering control system for a work vehicle for smoothly stopping the steering of front vehicle wheels comprises a memory, for storing a smoothing trigger position of the front wheels, sensor means, suitable to acquire information about the actual position of the front wheels, a data processing unit, suitable to process the information about the actual position acquired by the sensor means to compare it with the stored smoothing trigger position, wherein the data processing unit is suitable to control the actuating means for steering the front vehicle wheels. The actuating means may control at least one steering joint.

According to an aspect of the invention, a work vehicle comprises a chassis or main chassis, front vehicle wheels, at least one steering joint articulating either directly or indirectly at least one of the front vehicle wheels and the chassis, and the work vehicle also comprises actuating means for steering the front vehicle wheels with respect to the chassis either directly or indirectly.

The work vehicle may comprise a boom, and the boom may steer together with the front vehicle wheels with respect to the chassis or main chassis of the work vehicle.

The chassis may comprise a steerable chassis portion and a main chassis portion, the front vehicle wheels being integrally mounted onto said steerable chassis portion, and at least one steering joint articulates the steerable chassis portion and the main chassis portion, thereby indirectly articulating the front vehicle wheels and the chassis, wherein the actuating means are suitable to steer the steerable chassis portion with respect to the main chassis portion, thereby indirectly steering the front vehicle wheels with respect to the chassis. The work vehicle may comprise a boom mounted onto the steerable chassis portion.

The front vehicle wheels may be steerably mounted onto the chassis or main chassis of the work vehicle, and at least one steering joint articulates one or more front vehicle wheels with respect to the chassis, thereby directly articulating one or more front vehicle wheels and the chassis or main chassis of the work vehicle, wherein the actuating means are suitable to steer one or more front vehicle wheels with respect to the chassis, thereby directly steering one or more front vehicle wheels with respect to the chassis or main chassis portion.

According to an aspect of the invention, a work vehicle comprises at least one of said steering control system for smoothly stopping the steering of the front vehicle wheels.

Thanks to the proposed solutions, it is possible to avoid, or at least to reduce to the minimum, any end stroke shocks and any impacts of a steerable front chassis against any end stroke abutment walls of the work vehicle.

Thanks to the proposed solutions, it is possible to avoid, or at least to reduce to the minimum, any end stroke shocks and any impacts of one or more steerable wheels against any end stroke abutment walls of the work vehicle.

Thanks to the proposed solutions, end stroke abutment walls may be no longer provided on the work vehicle.

Thereby, the work vehicle may be made lighter and it results cheaper to manufacture, with respect to known solutions having steerable front chassis and/or the like.

Therefore, the work vehicle requires less fuel to perform a given task, thereby also the maintenance costs are reduced with respect to known solutions.

### . Figures

Further characteristics and advantages of the method, system and vehicle according to the present invention will appear from the following description of preferred embodiments, given by way of non-limiting examples, with reference to the attached figures, wherein:
- figure 1 shows a prior art exemplary work vehicle, in particular a compact wheel loader;
- figure 2 shows a block diagram of a steering control system of a work vehicle according to an embodiment;
- figure 3 diagrammatically shows a top view of a work vehicle, according to an embodiment;
- figure 4 diagrammatically shows a top view of a work vehicle, according to an embodiment.

### . Detailed description of some embodiments

According to a general embodiment, it is provided a steering control method for a work vehicle 100.

The work vehicle 100 may be a compact wheel loader, an agricultural vehicle, a soil-shifting machine, an earth-moving machine, and/or the like.

The work vehicle 100 comprises a chassis 102, 102'. The chassis 102, 102' may comprise a steerable chassis portion 102' and a main chassis portion 102, the steerable chassis portion 102' being steerable with respect to the main chassis portion 102, thereby forming a steering joint 117 articulating said steerable chassis portion 102' with respect to said main chassis portion 102. The at least one steering joint 117 may comprise a hinge, a double joint, or any suitable rotational joint having rotation or rototranslation axis substantially vertical, to articulate the chassis 102 and the front vehicle wheels 115 or the main chassis 102 and the steering chassis 102'.

The work vehicle 100 comprises vehicle wheels 115, 116. The vehicle wheels 115, 116 may comprise front wheels 115 and rear wheels 116. Preferably, the work vehicle 100 comprises two flanked front wheels 115 associated to a front axle of the work vehicle 100 and two flanked rear wheels 116 associated to a rear axle of the work vehicle 100.

The work vehicle 100 may further comprises a boom 103. The boom 103 may be steerable with respect to the chassis 102 of the work vehicle 100, and preferably the boom 103 is steerable with respect to the main portion of the chassis 102 of the work vehicle 100. The boom 103 preferably extends substantially frontally from the steerable chassis 102' or from the main chassis 102 of the work vehicle 100 in a cantilevered manner, forming a free end that may be associated to a bucket or a tool.

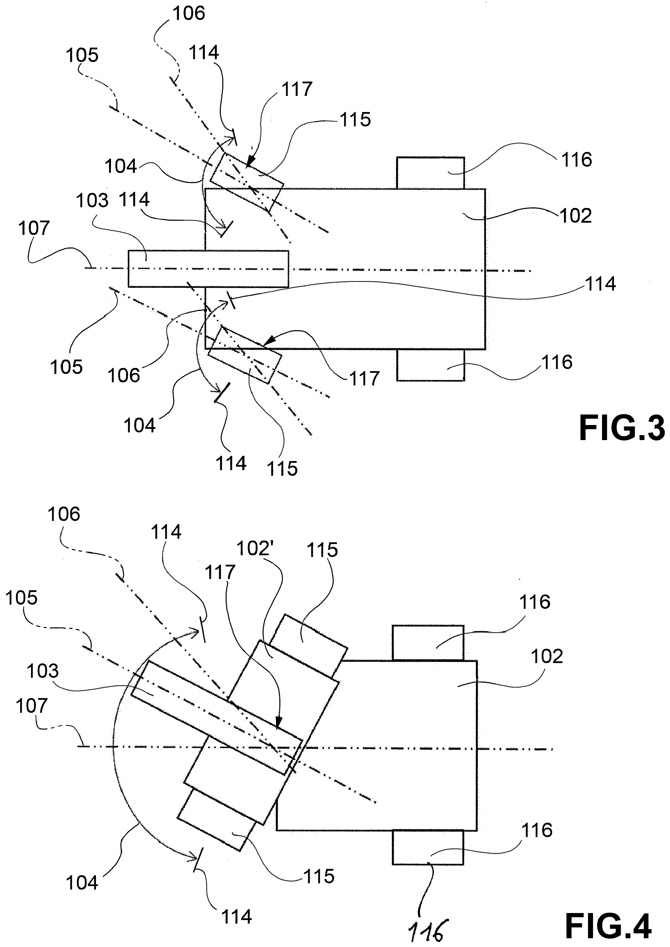

According to an embodiment as shown for example in **figure 3****,** the front vehicle wheels 115 are steerable with respect to the chassis 102 of the work vehicle 100 independently from the boom 103. In this way, the front vehicle wheels 115 are meant to be directly articulated to the chassis 102 or main chassis 102. Thereby, the boom 103 may stay in a reference position, for example aligned to the centerline 107, while the front wheels 115 steer with respect to the chassis 102, and therefore the front wheels 115 may steer in respect of the boom 103. The value of the steering angle formed by each front wheel 115 with the vehicle centerline 107 may depends to the parameters of the Ackermann's Law. Preferably, a steering joint 117 is provided for each front wheel 115 to articulate each front wheel 115 with respect to the chassis 102. Each of front wheels 115 with respect to the chassis 102 may define a steering travel stroke 104. The travel stroke 104 may be circumferentially oriented.

According to an embodiment as shown for example in **figure 4****,** the front wheels 115 are steerable with respect to the main chassis portion 102 of the work vehicle 100, wherein the chassis 102 comprises at least two chassis portions 102, 102' (i.e. a main chassis portion 102 and a steerable chassis portion 102') articulated one in respect to the other forming at least one steering joint 117, and wherein the front vehicle wheels 115 are integrally connected to the steerable chassis portion 102' so that the front vehicle wheels 115 steer together with the steerable chassis portion 102'. In this way, the front vehicle wheels 115 are meant to be indirectly articulated to the chassis 102 or main chassis 102, through interposition of the steerable chassis portion 102'. The group of front vehicle wheels 115 with respect to the main chassis 102 may define a steering travel stroke 104. Also the boom 103 with respect to the main chassis 102 may define a steering travel stroke 104. The travel stroke 104 may be circumferentially oriented.

The front wheels 115 may stay in a reference position, for example a position substantially aligned to the work vehicle centerline 107.

The steering control method comprises the step of storing a smoothing trigger position 105. The smoothing trigger position 105 may be a position within the travel stroke 104. The smoothing trigger position 105 may be a radial coordinate. The smoothing trigger position 105 may be a predefined position. The smoothing trigger position 105 may result from data processing and/or from manual input by a user of the work vehicle 100.

According to a mode of operation, the steering control method comprises the step of exerting a front wheels steering request. The front wheels steering request may be exerted by an input action applied onto a steering control interface 113, for example manual action applied onto a wheel, for example a steering control wheel, or a joystick or the like.

The steering control method comprises the step of steering the front vehicle wheels 115 within the travel stroke 104. As a response to the front wheels 115 steering request, the front wheels 115 may be moved along their travel stroke 104.

The front wheels 115 may be steered either directly or indirectly.

Whereas the chassis comprises said steerable chassis portion 102', then the step of steering the front vehicle wheels 115 involves steering them indirectly, by steering the steerable chassis 102' about the steering joint 117. That may determine also the steering of the boom 103, together with the front wheels 115. The boom 103 may steer of substantially the same steering angle as the front vehicle wheels 115 do.

Whereas the front vehicle wheels 115 are directly articulated to the chassis 102, then the step of steering the front vehicle wheels 115 involves steering them directly.

The steering control method comprises the step of sensing at least the actual position 106 of the one or more front wheels 115 within the travel stroke 104.

According to a mode of operation, only one of the front wheels 115 may be subject to the step of sensing the actual position 106 thereof. According to a mode of operation, both the front wheels 115 may be subject to the step of sensing the actual position 106 thereof, independently and/or for sought of redundancy.

According to a mode of operation, the step of sensing the actual position 106 is performed by sensing the actual position 106 of the steerable chassis 102' and/or sensing the actual position 106 of the boom 103. This mode of operation is particularly advantageous whereas provided together with a work vehicle 100 having a chassis 102 comprising at least two portions 102, 102' articulated one in respect to the other forming a steering joint 117.

By virtue of such a method comprising the step of sensing the actual position 106, if the sensed actual position 106 corresponds to the defined smoothing trigger position 105, then the method comprises the step of decelerating the front vehicle wheels 115 with the purpose of smoothly stopping the steering front vehicle wheels 115.

Therefore, the position of the front vehicle wheels 115 is monitored and, in order to avoid end stroke impacts or shocks, the steering speed (for example the angular velocity about the steering joint 117) of the front vehicle wheels 115 is slowed down when the front vehicle wheels reach the smoothing trigger position 105. When the front vehicle wheels 115 reach the smoothing trigger position, the front wheels 115 smoothly brake, in other words slightly decelerate until they stop before, and thereby avoiding, to hit any end stroke walls.

Therefore, end stroke walls of the work vehicle may be realized lighter and smaller than in known solutions resulting to a decreased weight and volumetric encumber of the steering joint 117 and of the work vehicle 100 as a whole. In some cases, end stroke walls are no longer needed.

By means of decelerating the front wheels 115, it is possible to avoid heavily abutments against a suitable abutment wall provided at the end stroke positions 114 of the travel stroke 104 of the front wheels 115.

Whereas the chassis 102 comprises a steerable chassis portion 102', by means of decelerating the steerable chassis 102', it is possible to avoid heavily abutments against a suitable abutment wall provided at the end stroke positions 114 of the travel stroke 104 of the steerable chassis 102'.

Thereby, by means of decelerating the steering process and avoiding heavy abutments, the at least one steering joint 117 can be made lighter as there is no longer need to get a steering joint 117 capable of bearing heavy shocks, with respect to known solutions.

Thereby, there is no longer the need of providing suitably reinforced abutment walls for the front vehicle wheels 115 and/or for the steerable portion of the chassis 102' of the work vehicle 100, as the front vehicle wheels 115 and/or the steerable portion of the chassis 102' progressively slow down and preferably stops before reaching the end stroke position. Avoiding the need of providing suitably reinforced abutment walls, makes possible to reduce the weight of the work vehicle 100 with respect to known solutions, keeping equal its capabilities.

By virtue of smoothening the stopping process of the front vehicle wheels 115, which may provided integrally jointed with a steerable chassis portion 102', are avoided unwanted shocks due to impacts between the front vehicle wheels 115 and the chassis 102 of the work vehicle 100, and if it is the case between the steerable chassis 102' and the main chassis 102.

In order to carry out the method, there is no need to provide expensive dumpers to dampen the motion of the front vehicle wheels 115 within their respective travel stroke 104 as well within the travel stroke 104 of the steerable chassis 102', because the steering control method is based on the provision of said sensing means 111 able to detect whether the front vehicle wheels 115 have reached the smoothing trigger position 105.

The sensing means 111 can comprise at least one position sensor.

The at least one position sensor can be a contact sensor, for example it can comprise a load cell connected to a lever, wherein the lever is suitable for being displaced by the steering front vehicle wheels 115 when the one or more front vehicle wheels 115 reach the smoothing trigger position 105.

The at least one position sensor can work optically and/or magnetically tracking the front vehicle wheels 115 and/or tracking the presence of the front vehicle wheels 115 in a predefined tracking volume, which for example may surround the smoothing trigger position 105.

According to a mode of operation, the step of sensing at least the actual position comprises the further step of determining the travel direction of the front vehicle wheels 115 within the travel stroke 104.Thereby, if the sensed actual position 106 corresponds to the defined smoothing trigger position 105 and the travel direction of the front vehicle wheels 115 is directed away from a reference position 107 of the front vehicle wheels 115 within the travel stroke 104, then the method comprises said step of decelerating the front vehicle wheels 115. The reference position may be defined as a position where the longitudinal direction of each vehicle wheel 115 is aligned with the work vehicle centerline 107.

In this way, the directionality of the steering motion of the front vehicle wheels 115 is detected by the sensor means 111, thereby the step of decelerating the front vehicle wheels 115 may be carried out only when the front vehicle wheels 115 travel away from its reference position, for example away from the centerline 107 of the work vehicle 100, and reaches the smoothing trigger position 105.

Conversely, in this way, when the front vehicle wheels 115 reach the smoothing trigger position 105 moving towards the reference position, for example towards the centerline 107 of the work vehicle 100, then the step of decelerating the front vehicle wheels 115 may not be carried out.

According to a mode of operation, the steering control system 101 continuously checks the position of the steering front vehicle wheels 115, and when the detected position 106 is at or near a desired stop position, for example at or near the smoothing trigger position 105, the steering control system 101 starts a ramping down procedure in order to soft stop the steering front vehicle wheels 115, before the front vehicle wheels 115 could hit any end stroke walls, which thereby may be no longer provided.

According to a mode of operation, the method comprises the further step of storing the sensed actual position 106 at one or more given time instants. For example, the sensed actual position 106 acquired at a certain frequency are all stored in an array as a function of the detection time. The detection time may be counted starting from the steering request.

According to a mode of operation, the step of determining the travel direction of the front vehicle wheels 115 is carried out by means of comparing the sensed actual position 106 with a stored previous position of the front vehicle wheels 115. One or more stored previous position of the front vehicle wheels 115 are preferably stored within the memory 110. Preferably, the step of determining the travel direction of the front vehicle wheels 115 is carried out by means of comparing the sensed actual position 106 with the stored previous position of the front vehicle wheels 115 closer in time to the actual position 106.

According to a mode of operation, the front vehicle wheels 115 are actuated by the action of a work fluid 108. The work fluid 108 can be a liquid, for example oil, and the front vehicle wheels 115 may be hydraulically actuated. The working fluid 108 may flow in conduits provided in the front vehicle wheels 115, for example in a cylinder with the purpose of controlling the motion of the front vehicle wheels 115. The work fluid 108 can be a gas, for example pressurized air, and the front vehicle wheels 115 may be pneumatically actuated.

According to a mode of operation, the step of moving the front vehicle wheels 115 comprises the further step of controlling a solenoid valve 109, which controls the flow rate and/or the pressure of the work fluid 108. Preferably, at least one solenoid valve 109 is provided to control the flow rate and/or the pressure of the work fluid 108 entering the front vehicle wheels conduits.

According to a mode of operation, the step of decelerating the front vehicle wheels 115 is carried out by progressively reducing the flow rate and/or the pressure of the working fluid 108, which exits the solenoid valve 109. In this way, a reduction of the actuating force of the front vehicle wheels 115 can be achieved, which in turn determines a deceleration of the front vehicle wheels 115 speed, within their respective travel stroke 104 as well as within the travel stroke 104 of the steerable chassis portion 102'.

More than one solenoid valves 109 may be provided, which may be arranged either in series or in parallel.

According to a general embodiment, a steering control system 101 for a work vehicle 100 is provided.

The steering control system 101 is designed for smoothly stopping the steering front vehicle wheels 115 of the work vehicle 100. The work vehicle 100 comprises actuating means for steering the front vehicle wheels 115 either directly or indirectly.

The steering control system 101 comprises a memory 110, for storing a smoothing trigger position 105 of the front vehicle wheels 115.

The steering control system 101 comprises sensor means 111, suitable to acquire information about the actual position 106 of the front vehicle wheels 115.

The sensor means 111 may be suitable to detect the actual position 106 of one or more front vehicle wheels 115.

The sensor means 111 may be suitable to detect the actual position 106 of the steerable chassis 102'.

The sensor means 111 may be suitable to detect the actual position 106 of the boom 103, whereas the boom 103 is integral with the steerable chassis 102' of the work vehicle 100.

The steering control system 101 comprises a data processing unit 112, suitable to process the information about the actual position 106 acquired by the sensor means 111 to compare it with the stored smoothing trigger position 105. For example, the data processing unit 112 is an electronic data processing unit and comprises at least one PLC.

Advantageously, the data processing unit 112 is suitable to control the actuating means 109 for steering the front vehicle wheels 115.

According to an embodiment, the data processing unit 112 is suitable to control the actuating means 109, which in turn steer the steerable chassis 102', so that the front vehicle wheels 115 steer.

According to an embodiment, the data processing unit 112 is suitable to control the actuating means 109, which in turn steer the steerable front vehicle wheels 115.

The sensing means 111 can comprise at least one position sensor. The at least one position sensor can be a contact sensor, for example it can comprise a load cell connected to a lever, wherein the lever is suitable for being displaced by the steering front vehicle wheels 115 when the front vehicle wheels 115 reach the smoothing trigger position 105. The at least one position sensor can work optically and/or magnetically tracking the front vehicle wheels 115.

The sensing means 111 can comprise at least one position sensor. The at least one position sensor can be a contact sensor, for example it can comprise a load cell connected to a lever, wherein the lever is suitable for being displaced by the steering steerable chassis 102' when the steerable chassis 102' reach the smoothing trigger position 105. The at least one position sensor can work optically and/or magnetically tracking the front vehicle wheels 115.

The sensor means 111 may be provided at least partially on the front vehicle wheels 115 or on the steerable chassis 102'.

The sensor means 111 may be provided at least partially on the chassis 102 of the work vehicle 100.

The sensor means 111 may be provided at or near the at least one steering joint 117.

According to a preferred embodiment, the steering control system 101 is designed to perform the method according to any of the mode of operation described above.

According to a general embodiment, a work vehicle 100 comprises a chassis 102, 102'. The chassis 102, 102' may comprise a steerable chassis portion 102' and a main chassis portion 102, the steerable chassis portion 102' being steerable with respect to the main chassis portion 102, thereby forming a steering joint 117 articulating said steerable chassis portion 102' with respect to said main chassis portion 102.

The work vehicle 100 also comprises vehicle wheels 115, 116. The vehicle wheels 115, 116 may comprise front wheels 115 and rear wheels 116. Preferably, the work vehicle 100 comprises two flanked front wheels 115 associated to a front axle of the work vehicle 100 and rear two flanked rear wheels 116 associated to a rear axle of the work vehicle 100.

Thereby, the work vehicle 100 comprises at least one steering joint 117. A steering joint 117 may be provided for each front wheel 115, articulating each front wheel 115 with respect to the chassis 102 of the work vehicle 100. A steering joint 117 may be provided between the main chassis portion 102 and the steerable chassis portion 102'.

The work vehicle 100 preferably is a work vehicle 100 as described in any of the embodiment described above.

The work vehicle 100 also comprises a boom 103. As previously described, the boom 103 can steer together with the front wheels 115 or the boom 103 cannot steer together with the front wheels 115.

The work vehicle 100 comprises also actuating means for moving the front wheels 115 with respect to the chassis 102. The actuating means may comprise work fluid 108 and at least one solenoid valve 109 to control the outlet flow rate and/or fluid pressure.

Advantageously, the work vehicle 100 comprises a steering control system 101 for smoothly stopping the front vehicle wheels 115, according to any of the embodiments described above.

According to a preferred embodiment, the actuating means for moving the front vehicle wheels 115 comprises a working fluid 108, and a solenoid valve 109, wherein the data processing unit 112 is suitable to control the solenoid valve 109. By means of controlling the solenoid valve 109, it is possible to adjust the flow rate and/or the pressure of the work fluid 108 entering controlling the motion of the front vehicle wheels 115.

According to a preferred embodiment, the solenoid valve 109 is a proportional solenoid valve. Thereby, the data processing unit 112 sends driving current 1109 to the solenoid valve 109, controlling it.

Preferably, in order to decelerate the front vehicle wheels 115, the solenoid valve 109 progressively closes, reducing the flow rate of the work fluid 108 towards the front vehicle wheels 115, until the front vehicle wheels 115 smoothly stop. Preferably, the stop position of the front vehicle wheels 115 is located within the travel stroke 104 and a certain distance from the end stroke 114 of the travel stroke 104, avoiding to abut against a wall.

According to a preferred embodiment, the work vehicle 100 is designed to perform the method according to any of the mode of operation described above.

By virtue of the features and modes of operation described above provided either separately or jointly in particular embodiments, it is possible to satisfy the above mentioned needs achieving the above cited advantages, and in particular:
- the costs for the components carrying the front vehicle wheels 115 are reduced with respect to known solutions, as it is no longer felt the need of providing heavy end stroke walls;
- the weight of the work vehicle 100 can be reduced;
- fuel consumption therefore is reduced;
- the speed of the steering front vehicle wheels 115 may be detected or calculated;
- the comfort of the operator, i.e. the driver, is greatly enhanced.

Those skilled in art may make many changes and adaptations to the embodiments described above or may replace elements with others, which are functionally equivalent, in order to satisfy contingent needs without however departing from the scope of the appended claims.

### LIST OF REFERENCES

- **1**: Work vehicle of the prior art
- **2**: Bucket
- **3**: Frame
- **5**: Boom
- **7**: Joystick
- **9**: Cab or cabin
- **100**: Work vehicle
- **101**: Steering control system
- **102**: Chassis of the vehicle, or main chassis
- **102'**: Steerable portion of the chassis
- **103**: Boom of the vehicle
- **104**: Travel stroke of the boom
- **105**: Smoothing trigger position
- **106**: Actual position
- **107**: Reference position
- **108**: Work fluid
- **109**: Solenoid valve
- **I109**: Drive current of the solenoid valve
- **110**: Memory
- **111**: Sensor means, or sensing means
- **112**: Data processing unit
- **113**: Steering interface, or joystick
- **114**: Stroke end
- **115**: Front vehicle wheel
- **116**: Rear vehicle wheel
- **117**: Steering joint

## Claims

1. Steering control method for a work vehicle (100) comprising the following steps:
- storing a smoothing trigger position (105);
- steering the front vehicle wheels (115);
- sensing at least the actual position (106) of the front vehicle wheels (115); and
if the sensed actual position (106) corresponds to the defined smoothing trigger position (105),
then the method comprises the step of:
- decelerating the front vehicle wheels (115) with the purpose of smoothly stopping the steering front vehicle wheels (115).

2. Method according to claim **1,** wherein the step of sensing at least the actual position comprises the further step of:
- determining the travel direction of the front vehicle wheels (115); so that
if the sensed actual position (106) corresponds to the defined smoothing trigger position (105) and the travel direction of the front vehicle wheels (115) is directed away from a reference position (107),
then the method comprises said step of decelerating the front vehicle wheels (115).

3. Method according to claim **1** or **2,** comprising the further step of storing the sensed actual position (106) at one or more given time instants.

4. Method according to claim **3,** wherein the step of determining the travel direction of the front vehicle wheels (115) is carried out by means of comparing the sensed actual position (106) with a stored previous position of the front vehicle wheels (115).

5. Method according to any one of the preceding claims, wherein the front vehicle wheels (115) are steered by the action of a work fluid (108).

6. Method according to claim **5,** wherein step of steering the front vehicle wheels (115) comprises the further step of controlling a solenoid valve (109), which controls the flow rate and/or the pressure of the work fluid (108).

7. Method according to claim **6,** wherein the step of decelerating the front vehicle wheels (115) is carried out by progressively reducing the flow rate and/or the pressure of the working fluid (108) exiting the solenoid valve (109).

8. Steering control system (101) for a work vehicle (100) for smoothly stopping the steering of front vehicle wheels (115), the work vehicle (100) having actuating means for steering the front vehicle wheels (115) either directly or indirectly, said system (101) comprising:
- a memory (110), for storing a smoothing trigger position (105) of the front wheels (115);
- sensor means (111), suitable to acquire information about the actual position (106) of the front wheels (115);
- a data processing unit (112), suitable to process the information about the actual position (106) acquired by the sensor means (111) to compare it with the stored smoothing trigger position (105);
wherein
the data processing unit (112) is suitable to control the actuating means for steering the front vehicle wheels (115).

9. Work vehicle (100) comprising:
- a chassis (102), and
- front vehicle wheels (115, 116), and
- at least one steering joint (117), articulating, either directly or indirectly, at least one of the front vehicle wheels (115) and the chassis (102); and
- actuating means for steering the front vehicle wheels (115) with respect to the chassis (102), either directly or indirectly; and
- a steering control system (101) for smoothly stopping the steering of the front vehicle wheels (115) according to claim 8.

10. Work vehicle (100) according to claim **9,** wherein the actuating means for moving the front wheels (115) comprise:
- a working fluid (108), and
- a solenoid valve (109);
wherein:
the data processing unit (112) is suitable to control the solenoid valve (109);
- preferably the solenoid valve (109) is a proportional solenoid valve.

11. Work vehicle (100) according to claim **9** or **10,** wherein:
- the chassis (102) comprises a steerable chassis portion (102') and a main chassis portion (102),
- the front vehicle wheels (115) being integrally mounted onto said steerable chassis portion (102'),
- at least one steering joint (117) articulates the steerable chassis portion (102') and the main chassis portion (102),
- the actuating means are suitable to steer the steerable chassis portion (102') with respect to the main chassis portion (102); and/or wherein
- the work vehicle (100) comprises a boom (103) mounted onto the steerable chassis portion (102').

12. Work vehicle (100) according to claim **9** or **10,** wherein:
- the front vehicle wheels (115) are steerably mounted onto the chassis (102),
- at least one steering joint (117) articulates one or more front vehicle wheels (115) with respect to the chassis (102),
- the actuating means are suitable to steer one or more front vehicle wheels (115) with respect to the chassis (102).
